(19) Europäisches Patentamt
European Patent Office
Office européen des brevets

(11) **EP 1 504 960 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
*H04N 3/18* (2006.01)     *H04N 3/14* (2006.01)
*B60R 1/00* (2006.01)     *H04N 7/18* (2006.01)

(21) Anmeldenummer: **04017287.6**

(22) Anmeldetag: **22.07.2004**

(54) **Verfahren und Vorrichtung zur Verbesserung der Sicht in einem Kraftfahrzeug**

Device and method to improve vision in a vehicle

Appareil et méthode pour améliorer la vision dans un vehicule

(84) Benannte Vertragsstaaten:
**DE FR GB IT SE**

(30) Priorität: **07.08.2003 DE 10336329**

(43) Veröffentlichungstag der Anmeldung:
**09.02.2005 Patentblatt 2005/06**

(73) Patentinhaber: **ROBERT BOSCH GMBH**
**70442 Stuttgart (DE)**

(72) Erfinder: **Haug, Karsten**
**70372 Stuttgart (DE)**

(56) Entgegenhaltungen:
**EP-A- 0 869 031     EP-A- 1 407 931**
**EP-A- 1 460 383     WO-A-02/36389**
**WO-A-03/064213     DE-A- 3 900 667**
**DE-A- 10 059 315**

## Beschreibung

Stand der Technik

Die Erfindung betrifft ein Verfahren und eine Vorrichtung zur Verbesserung der Sicht in einem Kraftfahrzeug.

Aus der deutschen Offenlegungsschrift DE 40 32 927 A1 ist eine Vorrichtung zur Verbesserung der Sichtverhältnisse in einem Kraftfahrzeug beschrieben. Dabei wird das mit einer infrarotempfindlichen Kamera erfasste Bild mit einer als Head-up-Display ausgebildeten Anzeigevorrichtung als virtuelles Bild der äußeren Landschaft visuell überlagert und dem Fahrer angezeigt. Die Kamera ist dabei starr am Kraftfahrzeug befestigt und der Erfassungsbereich der Kamera wird weder in Gier- noch in Nickwinkelrichtung dynamisch nachgeführt.

Ferner ist aus der europäischen Patentanmeldung EP 08 69 031 A2 ein Verfahren zur Regulierung von Leuchtweite und/oder Leuchtrichtung von Scheinwerfern in einem Kraftfahrzeug bekannt, wobei die Scheinwerfer aufgrund von Sensordaten einer Kamera eingestellt werden. Die Einstellung der Scheinwerfer wird dabei an den ermittelten Straßenverlauf angepasst. Bei Kurvenfahrten wird über solche adaptiven Scheinwerfer zwar die Straße beleuchtet, die Kamera nimmt jedoch weiterhin die tangentiale Szene auf, schaut also nicht auf die Straße, sondern in nicht relevante Bereiche abseits der Straße, beispielsweise in den Wald. Dabei nimmt die Sichtweite in Richtung der Straße und die Relevanz der dargestellten Informationen der Kamera signifikant ab. Gerade Kurven sind aber besonders unfallträchtig, da Objekte, wie Kraftfahrzeuge, Fußgänger und/oder Tiere, in der Kurve sehr spät erfassbar sind.

Aus der deutschen Offenlegungsschrift DE 199 50 033 A1 ist eine Kameravorrichtung für Kraftfahrzeuge mit einer variabel ausrichtbaren Kamera zur Erfassung eines vor einem Fahrzeug liegenden Straßenverlaufs bekannt. Es wird vorgeschlagen, die Nachführung der Kamera in Gier- und Nickwinkelrichtung durch eine mechanische Vorrichtung in Form einer beweglichen Plattform durch Antrieb vorzunehmen. Die Nachführung der Kamera erfolgt bereits vor Einfahrt in die Kurve aufgrund von Informationen eines Navigationssystems. Hinweise auf ein Verfahren und eine Vorrichtung zur Verbesserung der Sicht in einem Kraftfahrzeug, die eine kompakte Bauweise der Kamera ermöglichen, fehlen in der DE 199 50 033 A1.

Die WO 02/36389 A1 offenbart ein Nachtsichtgerät für ein Kraftfahrzeug, in welchem eine Kamera vorgesehen ist, die ein Infrarotbild auf der Straße vor dem Kraftfahrzeug erfasst, wobei ein von der Kamera erzeugtes Videosignal von einem Signalprozessor verarbeitet wird. Dabei wird das Blickfeld des auf einem Monitor dargestellten Bildes in Übereinstimmung mit einem Kontrollsignal ausgewählt. Insbesondere kann die Weite des Blickfeldes mit zunehmender Geschwindigkeit verringert werden.

Vorteile der Erfindung

Das nachfolgend beschriebene Verfahren mit den Merkmalen des Anspruchs 1 hat den besonderen Vorteil, dass es kostengünstig zu realisieren ist, da lediglich Rechenleistung in der Verarbeitungseinheit benötigt wird, gegenüber einer aufwendigen und teuren Hardware- und Software-Lösung bei einem mechanischen Antrieb der Kamera zur Nachführung des Erfassungsbereiches, und der Bildausschnitt durch Auslesung lediglich von Pixelbereichen des CMOS-Bildsensors der Kamera bereitgestellt wird.

Ferner ist der Straßenverlauf, insbesondere bei starken Kurven, voll erfassbar. Hierdurch nimmt der Anteil der nutzbaren Bildinformation in vorteilhafter Weise zu. Vorteilhaft ist, dass die Sichtweite des Systems annähernd konstant und unabhängig vom Nickwinkel des Kraftfahrzeuges ist. Der Nickwinkel des Kraftfahrzeuges ändert sich beispielsweise beim Einfedern beim Bremsen und/oder beim Anstellen des Kraftfahrzeuges beim Beschleunigen. Bei darstellenden Kamerasystemen, beispielsweise bei auf nahem Infrarot basierenden Nachtsichtsystemen, trägt das Verfahren zu einer Erhöhung der Verkehrssicherheit bei, da der Straßenverlauf auch bei einer Fahrt nach den Bildern der Kamera vom Fahrer gut erkennbar ist. Beim Fahren auf Sicht kann ein Fahrer eines Kraftfahrzeuges durch Drehen des Kopfes den Sichtbereich verändern. Das nachfolgend beschriebene Verfahren stellt einen analogen Sichtbereich, insbesondere bei Nacht, zur Verfügung. Bei nicht darstellenden Kamerasystemen, beispielsweise Vorrichtungen zur Spurverlassenswarnung, werden relevante Bereiche der Szene in vorteilhafter Weise erfasst. Dies führt dazu, dass die Detektionssicherheit hoch ist und gleichzeitig kostbare Rechenleistung auf relevante Bereiche konzentriert ist. Ferner hat das nachfolgend beschriebene Verfahren den Vorteil, dass das System eine hohe Lebensdauer und einen geringen Verschleiß aufweist, da keine bewegten Teile zur Nachführung erforderlich sind. Vorteilhaft ist, dass das Verfahren zur Verbesserung der Sicht in einem Kraftfahrzeug eine kompakte Bauweise des Systems ermöglicht, da beispielsweise kein zusätzlicher Platzbedarf für Antriebe und/oder Kühlleistung für Verlustleistung von Antrieben notwendig ist. Vorteilhaft ist ferner, dass für eine zweiachsige Nachführung, also in Gier- und Nickwinkelrichtung, gegenüber einer einachsigen Nachführung, beispielsweise in Gierwinkelrichtung im Wesentlichen der gleiche Aufwand notwendig ist. Vorteilhaft ist, dass das Verfahren auf eine dreiachsige Nachführung in Gier-, Nick- und Wankwinkelrichtung möglich ist. Vorteilhaft ist ferner, wenn die Größe des Bildausschnittes und/oder die Position des Bildausschnittes zusätzlich oder alternativ in Abhängigkeit der aktuellen Fahrtrichtung des Kraftfahrzeuges und/oder der vom Fahrer gewünschten Fahrtrichtung des Kraftfahrzeuges eingestellt wird. Die aktuelle Fahrtrichtung lässt sich beispielsweise aus den Bilddaten der wenigstens eine Kamera bestimmen, während die vom Fahrer gewünschte Fahrtrichtung beispielsweise aus der Lenkradstellung über einen Lenkradsensor und/oder über den Lenkwinkel über wenigstens einen Lenkwinkelsensor bestimmbar ist.

Besonders vorteilhaft ist die Ermittlung des Straßenverlaufes in Abhängigkeit von Bilddaten einer und/oder der wenigstens einen Kamera, da hierbei die Fahrzeugposition in Bezug zur Straße exakt ermittelbar ist und gleichzeitig der Straßenverlauf aktuell ermittelbar ist. Dies hat den Vorteil, dass die Änderung der Position des Bildausschnittes innerhalb des wenigstens einen Bildes bereits vor dem Einfahren des Kraftfahrzeuges in die Kurve ermöglicht wird. Damit wird eine vorausschauende Nachführung des Erfassungsbereiches der Kamera in besonders vorteilhafter Weise ermöglicht.

Die Einstellung der Größe des Bildausschnittes und/oder der Position des Bildausschnittes innerhalb des wenigstens einen Bildes zumindest in Abhängigkeit der Daten wenigstens eines weiteren Kraftfahrzeugsensors, insbesondere wenigstens eines Lenkradsensors und/oder wenigstens eines Lenkwinkelsensors, trägt in vorteilhafter Weise zu einem robusten Verfahren bei. Besonders vorteilhaft ist, wenn die Größe des Bildausschnittes und/oder die Lage des Bildausschnittes innerhalb des wenigstens einen Bildes in Abhängigkeit der Blickrichtung des Fahrers eingestellt wird. Der Blick und damit die Blickrichtung des Fahrers ist im Allgemeinen auf relevante Szenen gerichtet. Durch eine Innenraumkamera, die beispielsweise das Gesicht des Fahrers aufnimmt, wird beispielsweise durch Auswertung der Position der Augen die Blickrichtung ermittelt.

Besonders vorteilhaft ist das nachfolgend beschriebene Verfahren, bei dem die Größe des Bildausschnittes und/oder die Position des Bildausschnittes innerhalb des wenigstens einen Bildes zumindest in Abhängigkeit der Einstellung der Scheinwerfer eingestellt wird. Der Vorteil hierbei ist, dass die erfasste Szene im Bildausschnitt mit der Beleuchtung durch die Scheinwerfer annähernd gleich ist.

Vorteilhaft ist eine Variante des nachfolgend beschriebenen Verfahrens, bei der die Größe des Bildausschnittes in Abhängigkeit der Position des Bildausschnittes derart eingestellt wird, dass der Öffnungswinkel des Bildausschnittes annähernd konstant ist. Bei darstellenden Systemen erhält der Benutzer hierdurch einen vergleichbaren Erfassungsbereich, wie er ihn bei Drehung des Kopfes gewohnt ist.

Besondere Vorteile weist das nachfolgend beschriebene Verfahren auf, bei dem die Richtung der optischen Achse in Bezug zum Kraftfahrzeug einstellbar ist. Die Kombination der elektronischen Nachführung des Erfassungsbereiches mit einer solchen mechanischen Nachführung hat den Vorteil, dass der Erfassungsbereich vergrößert werden kann, wobei die oben beschriebenen Vorteile der elektronischen Nachführung durch die Eigenschaften der mechanischen Nachführung vorteilhaft ergänzt werden.

Vorteilhaft ist eine Anpassung des wenigstens einen Bildausschnittes an die Bildpunkt-Auflösung der Anzeigeeinheit, da hierbei der ganze Bildausschnitt unabhängig von dessen Größe angezeigt wird.

Vorteilhaft ist, wenn der Bildausschnitt nachbearbeitet wird, wobei die natürliche Vignettierung, d.h. der Abfall der Intensität zum Bildrand hin, des Bildes kompensiert wird. Alternativ oder zusätzlich ist es ferner vorteilhaft den Bildausschnitt derart nach zu bearbeiten, dass die Verzeichnung des Objektives kompensiert wird.

Die vorstehend beschriebenen Vorteile des Verfahrens gelten entsprechend für eine Vorrichtung nach Anspruch 9 zur Verbesserung der Sicht in einem Kraftfahrzeug.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsformen näher erläutert.
Es zeigen:

-     Figur 1 ein Blockdiagramm des bevorzugten Ausführungsbeispiels,
-     Figur 2 drei Szenen zur Erläuterung der Position des Bildausschnittes in Gierwinkelrichtung,
-     Figur 3 drei Szenen zur Erläuterung der Position des Bildausschnittes in Nickwinkelrichtung,
-     Figur 4 drei Szenen zur Erläuterung der Einstellung der Größe des Bildausschnittes,
-     Figur 5 ein Blockdiagramm des Signalflusses des bevorzugten Ausführungsbeispiels,
-     Figur 6 ein Blockdiagramm des Signalflusses zur Berechnung des Nickwinkels,
-     Figur 7 ein Blockdiagramm des Signalflusses zur Berechnung des Gierwinkels.

Beschreibung von Ausführungsbeispielen

Nachfolgend werden ein Verfahren, eine Vorrichtung und eine Verarbeitungseinheit zur Verbesserung der Sicht in einem Kraftfahrzeug beschrieben. Aus dem Bild der Umgebung des Kraftfahrzeuges, das eine Kamera der Kraftfahrzeuges aufnimmt, wird ein Bildausschnitt bereitgestellt, wobei die Größe des Bildausschnittes und zusätzlich oder alternativ die Position des Bildausschnittes innerhalb des Bildes in Abhängigkeit des Straßenverlaufes und/oder der aktuellen und/oder vom Fahrer gewünschten Fahrtrichtung des Kraftfahrzeuges eingestellt wird.

Der Sichtwinkel der Kamera, also in Gier- und/oder Nick- und/oder Wankwinkelrichtung, wird rein elektronisch nachgeführt. Dies geschieht durch Nachführen des Bildausschnittes, des sogenannten window of interest, auf den Bildsensor einer CMOS-Kamera. Im Gegensatz zu einer mechanischen Nachführung über einen Antrieb wird hierbei die optische Achse der Kamera nicht verändert, sondern die Kamera bleibt konstant ausgerichtet. Die Richtung der optischen Achse wird dabei durch zwei Punkte, dem Objektivhauptpunkt und dem Mittelpunkt des Bildsensors, bestimmt. Das Nachführen des ausgelesenen Pixel-Bereichs des Bildsensors der CMOS-Kamera (window of interest) erfolgt durch Beschreiben von Konfigurationsregistern direkt im CMOS-Bildsensor. Das window of interest heutiger CMOS-Bildsensoren kann bisher nur rechtwinklig gewählt werden, wird aber in zukünftigen Sensorgenerationen mehr Freiheitsgrade zulassen. Bei schrägwinkligen Bildausschnitten wird dann auch eine direkte Wankwinkelkorrektur möglich werden Bei heutigen CMOS-Bildsensoren ist bereits eine einfache Nachführung in Gierwinkelrichtung und/oder in Nickwinkelrichtung möglich. Eine Überlagerung der Nachführung in Gier- und/oder Nick- und/oder Wankwinkelrichtung ist einfach möglich. Dies führt soweit, dass im Extremfall der Bildausschnitt (window of interest) genau in der Ecke des Bildsensorpixelbereichs liegt.

Die Einstellung der Größe des Bildausschnittes und/oder der Position des Bildausschnittes erfolgt zumindest in Abhängigkeit des Straßenverlaufes, wobei die Informationen über den Straßenverlauf direkt aus den Bilddaten der Kamera insbesondere durch Verwertung der Informationen der Funktion Spurverlassenswarnung (lane departure warning) gewonnen werden. Der Verlauf der Straße in Nickwinkelrichtung ist in besonders vorteilhafter Weise mit einer Stereokamera bestimmbar. Zusätzlich werden die Informationen über den Straßenverlauf durch Auswertung weiterer Informationsquellen, wie Daten eines Navigationssystems, gewonnen. Das Funktionsmodul zur Berechnung der Größe des Bildausschnittes (window of interest) garantiert einen konstanten Öffnungswinkel, wie er bei der mechanisch gedrehten Kamera vorliegt. Ferner erlaubt das Funktionsmodul zur Abbildung des variabel großen Bildausschnittes (window of interest) auf Zielbildgröße eine einfache Weiterverarbeitung und/oder eine einfache Darstellung auf einer Anzeigeeinheit (Display). Das Funktionsmodul zur Kompensation des Intensitätsabfalls zum Bildfeldrand garantiert eine konstante Bildhelligkeit.

Unter dem Nickwinkel versteht man die Abweichung der Fahrachse des Kraftfahrzeuges in vertikaler Richtung, während der Gierwinkel die Abweichung der Fahrachse des Kraftfahrzeuges in horizontaler Richtung beschreibt. Der Wankwinkel ist ein Maß für die Verdrehung des Kraftfahrzeuges um die Fahrachse. Zur Gewinnung der Nachführinformation der Kamera in Richtung des Gierwinkels (Gierwinkelrichtung) werden verschiedene Informationen alternativ oder gemeinsam verwendet: Die Lenkradstellung erfassbar durch wenigstens einen Lenkradsensor, die Lenkwinkel der lenkenden Räder erfassbar durch wenigstens einen Lenkwinkelsensor, die Winkel der Frontscheinwerfer in horizontaler und vertikaler Richtung, Daten aus einem System zur Fahrdynamikregelung (ESP), der Gierwinkel des Kraftfahrzeuges erfassbar durch wenigstens einen Drehratensensor, Daten eines Navigationssystems über den Straßenverlauf, Daten eines kamerabasierten Spurerkennungssystems über den Straßenverlauf, Daten eines externen Spurführungssystems über den Straßenverlauf, beispielsweise Leitdraht, Funk, Satellit, Daten von weiteren Sensoren, die den Gierwinkel berechnen oder aus denen der aktuelle Gierwinkel berechnet werden kann und/oder Bilddaten einer kamerabasierten Innenraumvideosensorik, die eine Berechnung der Blickrichtung des Fahrers ermöglicht. Zur Gewinnung der Nachführinformation der Kamera in Nickwinkelrichtung werden verschiedene Informationen verwendet: Daten des Fahrwerks, insbesondere des aktiven Fahrwerks, Daten der dynamischen Lichtweitenkorrektur, Bilddaten wenigstens einer Kamera und/oder Bilddaten einer kamerabasierten Innenraumvideosensorik, die eine Berechnung der Blickrichtung des Fahrers ermöglicht.

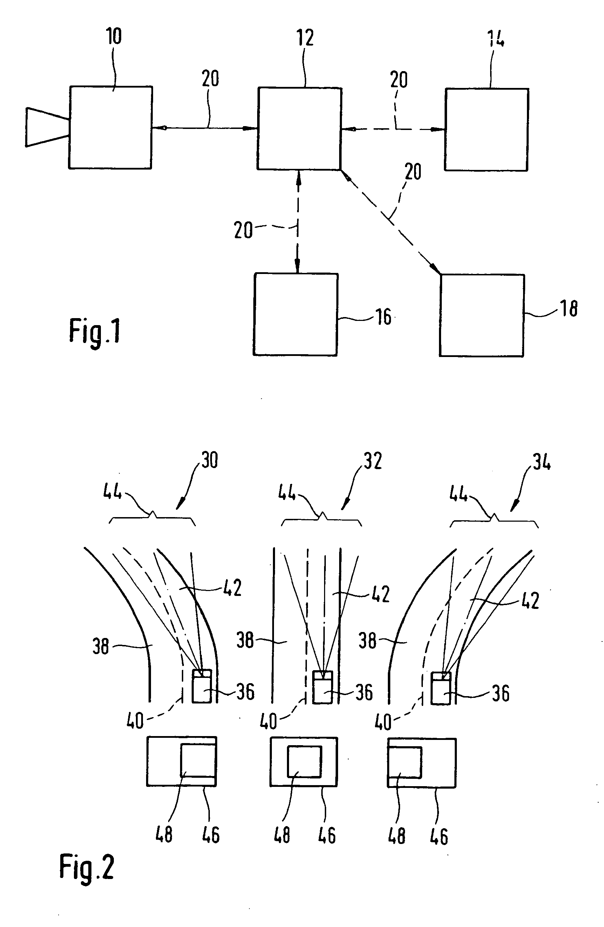

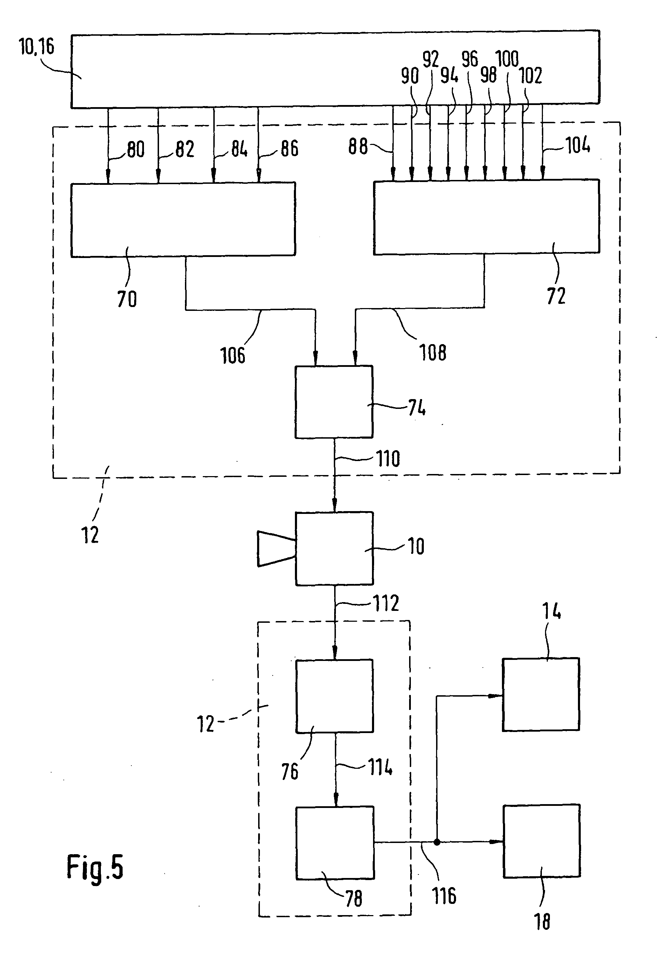

Figur 1 zeigt ein Blockdiagramm des bevorzugten Ausführungsbeispiels, bestehend aus einer CMOS-Kamera 10 und einer Verarbeitungseinheit 12, die durch eine Signalleitung 20 verbunden sind. Im bevorzugten Ausführungsbeispiel ist die Verarbeitungseinheit 12 über eine Signalleitung 20 mit wenigstens einem Informationssystem 16 des Kraftfahrzeugs verbunden. Ferner ist die Verarbeitungseinheit 12 über weitere Signalleitungen 20 mit eine Anzeigeeinheit 14 und einem nachfolgenden System 18 verbunden. Im bevorzugten Ausführungsbeispiel ist die CMOS-Kamera 10 an der Windschutzscheibe des Kraftfahrzeugs befestigt. Die CMOS-Kamera 10 ist im Innenraum des Kraftfahrzeuges im Bereich des Innenrückspiegels montiert, wobei die optische Achse der Kamera 10 zur Erfassung des Verkehrsraumes derart ausgerichtet ist, dass der Erfassungsbereich der CMOS-Kamera 10 zumindest Teile des Bereiches vor dem Kraftfahrzeug in Fahrtrichtung abdeckt. Die Verarbeitungseinheit 12 besteht aus mehreren, in Figur 5 dargestellten Funktionsmodulen 70, 72, 74, 76, 78. Die Funktionsmodule 70, 72, 74, 76, 78 sind als Programme oder Programmschritte wenigstens eines Mikroprozessor in der Verarbeitungseinheit 12 und/oder mittels programmierbarer Logik, insbesondere als ASIC und/oder FPGA, realisiert. Bei der Anzeigeeinheit 14 handelt es sich um ein Display und/oder um ein Head-up-Display. Das nachfolgende System 18 dient zur Realisierung wenigstens einer weiteren Kamerafunktion, beispielsweise der Spurverlassenswarnung. Die Daten werden über die Signalleitungen 20 elektrisch und/oder optisch und/oder per Funk übertragen, wobei die Signalleitungen 20 eine 1-Draht-Leitung und/oder eine 2-Draht-Leitung und/oder eine Mehrdraht-Leitung ist. Insbesondere sind die Signalleitungen alternativ oder zusätzlich als Busleitung ausgeführt.

Figur 2 zeigt 3 Szenen zur Erläuterung der Position des Bildausschnittes 48 innerhalb des Bildes 46 in Gierwinkelrichtung. Die erste Szene 30 zeigt ein Kraftfahrzeug 36 auf einer Straße 38 mit Fahrbahnmarkierungen 40. Das Kraftfahrzeug 36 fährt auf der Fahrbahn 42 in Fahrtrichtung, wobei die Straße 38 und damit die Fahrbahn 42 eine Linkskurve macht. Zur Erfassung der relevanten Bereiche der Straße 38 ist der Erfassungsbereich 44 der Kamera zum Kurveninneren verschoben. Zur Realisierung dieses Erfassungsbereiches 44 wird der Bildausschnitt 48 in Richtung des rechten Randes des Bildes 46 verschoben und zur Weiterverarbeitung verwendet. Die zweite Szene 32 zeigt ein Kraftfahrzeug 36 auf einer Straße 38 mit Fahrbahnmarkierungen 40, wobei sich das Kraftfahrzeug auf der Fahrbahn 42 befindet und geradeaus fährt. Der Erfassungsbereich 44 der Kamera ist in Fahrtrichtung zur Erfassung der Szene der Fahrbahn 42 und der Straße 38 ausgerichtet. Hierzu befindet sich der Bildausschnitt 48 in der Mitte des Bildes 46. Ferner ist in Figur 2 eine dritte Szene 34 dargestellt, bei der sich das Kraftfahrzeug 36 ebenfalls auf der Straße 38 mit Fahrbahnmarkierungen 40 befindet, wobei die Straße 38 und die Fahrbahn 42 eine Rechtskurve macht. Der Erfassungsbereich 44 der Kamera ist derart ausgerichtet, dass relevante Bereiche der Fahrbahn 42 und der Straße 38 dieser Rechtskurve erfasst werden. Hierzu ist der Bildausschnitt 48 im Bild 46 in horizontaler Richtung nach links verschoben. Grundlegend hierfür ist, dass Bildsensoren für Kameras mit großen Pixelmatrixen, beispielsweise 2272 x 1704 Pixeln, erhältlich sind. Damit übersteigt die Größe des Bildsensors (Imager) die Größe von automobilen Anzeigeeinheiten (Displays und/ oder Head- up- Displays) , die beispielsweise eine Auflösung von 640 x 480 Pixeln aufweisen. Bei nicht darstellenden Kamerafunktionen, beispielsweise Spurverlassenswarnung und/ oder Verkehrzeichenerkennung, sind ebenfalls Bildausschnitte in der Größe von ca. 640 x 480 Pixeln ausreichend. Im bevorzugten Ausführungsbeispiel wird ein CMOS-Bildsensor mit einer Größe der Pixelmatrix und damit des Bildes 46 von 2272 x 1704 Pixeln verwendet. Der Bildausschnitt 48 hat beispielsweise in der Szene 32 im bevorzugten Ausführungsbeispiel eine Größe von 640 x 480 Pixeln.

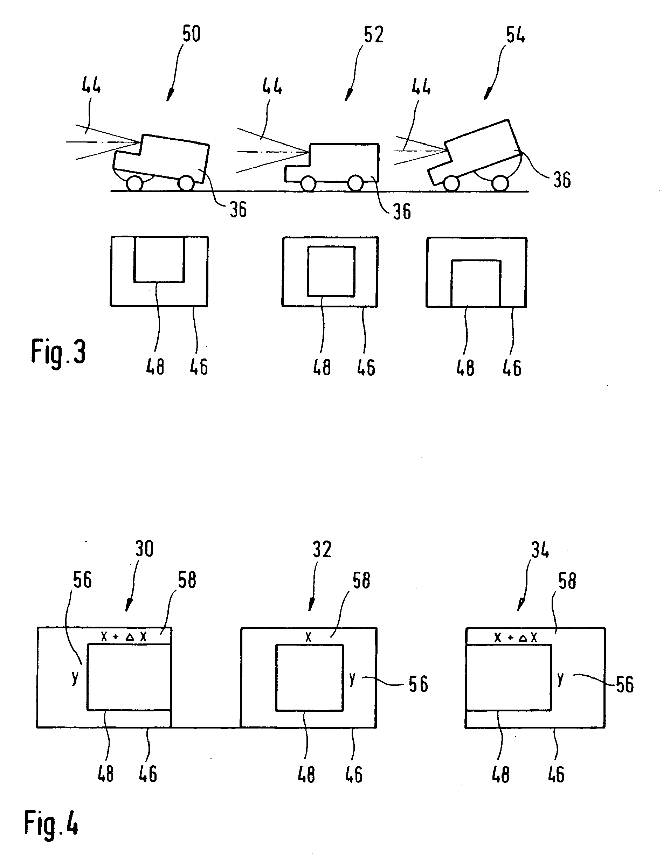

Figur 3 zeigt drei Szenen zur Erläuterung der Position des Bildausschnittes 48 im Bild 46 in Nickwinkelrichtung. In der ersten Szene 50 ist ein Kraftfahrzeug 36 bei beschleunigter Geradeausfahrt dargestellt. Durch die Beschleunigung wird der vordere Bereich des Kraftfahrzeuges 36 angehoben. Zur Kompensation dieser Nickbewegung und zur Ausrichtung des Erfassungsbereiches 44 der Kamera auf die relevanten Bereiche ist der Bildausschnitt 48 im Bild 46 nach oben verschoben, so dass die Kamera nach unten schaut. In der zweiten Szene 42 ist ebenfalls ein Kraftfahrzeug 36 dargestellt, wobei das Kraftfahrzeug 36 unbeschleunigt ist. In dieser Szene befindet sich der Bildausschnitt 48 im Wesentlichen in der Mitte des Bildes 46, so dass der Erfassungsbereich 44 der Kamera die relevanten Bereiche der Straße ebenfalls erfasst. Ferner ist eine weitere dritte Szene 54 dargestellt, bei der das Kraftfahrzeug 36 abgebremst wird. Hierbei senkt sich der vordere Teil des Kraftfahrzeuges ab, während der hintere Teil angehoben wird. Der Bildausschnitt 48 befindet sich am unteren Bereich des Bildes 46, so dass der Erfassungsbereich 44 der Kamera auf die relevanten Bereiche der Straße ausgerichtet ist. Zusammenfassend ergibt sich, dass in allen drei Szenen 50, 52, 54 durch die Verschiebung des Bildausschnittes 48 im Bild 46 nach oben bzw. unten der Erfassungsbereich 44 der Kamera in Bezug zur Straße im Wesentlichen unverändert ist.

Figur 4 zeigt drei Szenen zur Erläuterung der Einstellung der Größe des Bildausschnittes 48 im Bild 46. Wird ein Bildausschnitt 48 (window of interest) gleicher Größe über den Bildbereich (Bild 46) des Bildsensors (image) geschoben, dann ändert sich aufgrund der geometrischen Verhältnisse der Öffnungswinkel des Bildfelds. Dieser wird umso kleiner, je weiter man sich von der optischen Achse der Kamera entfernt. Will man den gleichen Öffnungswinkel über den kompletten Arbeitsbereich, also das komplette Bild 46, erreichen, dann muss der Bildausschnitt 48 in seiner Größe angepasst werden. In Figur 4 ist dies in Gierwinkelrichtung beispielhaft dargestellt. Im bevorzugten Ausführungsbeispiel wird diese Kompensation der Größe des Bildausschnittes 48 in Gierund/oder in Nickwinkelrichtung durchgeführt, wobei die Berechnung in Nickwinkelrichtung analog durchgeführt wird. In der zweiten Szene 32 befindet sich der Bildausschnitt 48 im Bild 46 sowohl in horizontaler als auch in vertikaler Richtung im Wesentlichen in Bildmitte. Im bevorzugten Ausführungsbeispiel hat der Bildausschnitt 48 eine Höhe 56 von y = 480 Pixeln, während die Breite 58 des Bildausschnittes 48 x = 640 Pixel beträgt. In der ersten Szene 30 ist die Position des Bildausschnittes 48 innerhalb des Bildes 46 nach rechts verschoben, beispielsweise infolge einer Linkskurve des Kraftfahrzeuges und/oder eines Straßenverlaufes bei dem die Straße eine Linkskurve macht. Zur Erreichung eines konstanten Öffnungswinkels des Bildausschnittes 48 wird in der ersten Szene 30 die Breite 58 des Bildausschnittes 48 um den Betrag Δx vergrößert. Da in diesem Beispiel keine Verschiebung in vertikaler Richtung erfolgt, bleibt die Höhe 56 des Bildausschnittes 48 mit y = 480 Pixeln konstant. Eine analoge Situation ergibt sich in der dritten Szene 34, bei der der Bildausschnitt 48 im Bild 46 nach links verschoben ist und dabei die Breite 58 des Bildausschnittes 48 um den Betrag Δx erhöht wurde. Die Höhe 56 des Bildausschnittes 48 bleibt ebenfalls mit y = 480 Pixeln unverändert. Die Einstellung der Größe des Bildausschnittes 48 in Abhängigkeit der Position des Bildausschnittes 48 innerhalb des wenigstens einen Bildes 46 erfolgt derart, dass der Öffnungswinkel des Bildausschnittes 48 annähernd konstant ist, indem die Änderung Δ der Breite 58 und/oder der Höhe 56 des Bildausschnittes 48 in Abhängigkeit der Bildsensorgröße und/oder der Brennweite des Objektives und/oder des Öffnungswinkels des Bildausschnittes und/oder der Abweichung von der Blickrichtung ermittelt wird.

Beispielsweise ermittelt sich der Betrag Δx und die Breite 58 (x) des Bildausschnittes 48 zu:

$$\Delta x = f \cdot \left[ \tan(\alpha + \beta) - \tan(\beta - \alpha) - 2 \cdot \tan(\alpha) \right]$$

$$x = 2 \cdot f \cdot \tan \alpha$$

wobei

x: genutzte Chipbreite bei Blickrichtung geradeaus
$\Delta x$: Differenz zu x bei Kurvenfahrt
$\alpha$: halber Öffnungswinkel des Blickfeldes = konstant
$\beta$: Abweichung von der Blickrichtung geradeaus in Gierwinkelrichtung
f: Brennweite des Objektivs

Für eine typische Auslegung mit f=12mm und $\alpha$=15° beträgt $\Delta x/x$ bei $\beta$=30° ca. 37%.

Figur 5 zeigt ein Blockdiagramm des Signalflusses des bevorzugten Ausführungsbeispiels, bestehend aus den in Figur 1 erläuterten Komponenten, der Kamera 10 und einer Verarbeitungseinheit 12, sowie einer Anzeigeeinheit 14 für darstellende Kamerafunktionen, Informationssystemen 16 des Kraftfahrzeuges und nachfolgenden Systemen 18 für nicht darstellende Kamerafunktionen. Die Verarbeitungseinheit 12 besteht aus 5 Funktionsmodulen 70, 72, 74, 76, 78. Im ersten Funktionsmodul 70 wird der aktuell erforderliche Nickwinkel 106 der Kamera 10 berechnet. Als Eingangsgrößen dieses ersten Funktionsmoduls 70 werden alternativ oder gemeinsam Daten der Kamera 10 und/oder von Informationssystemen 16 des Kraftfahrzeuges verwendet. Als Eingangsgrößen werden beispielsweise Daten 80 des Fahrwerks, insbesondere des aktiven Fahrwerks, des Kraftfahrzeuges und/oder Bilddaten 82 der Kamera 10 und/oder Daten 84 der dynamischen Lichtweitenkorrektur und/oder Bilddaten 86 einer Innenraumkamera, beispielsweise zur Ermittlung der Blickrichtung des Fahrers, verwendet. Das erste Funktionsmodul 70 berechnet aus den Eingangsdaten den Nickwinkel 106, der an das dritte Funktionsmodul 74 übertragen wird. Im zweiten Funktionsmodul 72 wird aus verschiedenen Eingangsgrößen der Kamera 10 und/oder von anderen Informationssystemen 16 des Kraftfahrzeuges der aktuell erforderliche Gierwinkel 108 der Kamera 10 berechnet und an das dritte Funktionsmodul 74 übertragen. Als Eingangsgrößen werden alternativ oder gemeinsam Daten 88 eines Lenkradsensors und/oder Daten 90 eines Lenkwinkelsensors und/oder wenigstens ein Winkel 92 der Frontscheinwerfer des Kraftfahrzeuges und/oder Daten 94 der Vorrichtung zur Fahrdynamikregelung (ESP) und/oder Daten 96 des Navigationssystems und/oder Bilddaten 98 der Kamera 10 und/oder Daten 100 von weiteren Fahrzeugsensoren, beispielsweise einem Gierratensensor und/oder Daten 102 einer Einrichtung zur Kraftfahrzeug-Umfeld-Kommunikation bzw. Kraftfahrzeug-Kraftfahrzeug-Kommunikation und/oder Bilddaten 104 einer Innenraumkamera verwendet. Das dritte Modul 74 berechnet aus dem Nickwinkel 106 und dem Gierwinkel 108 die Größe des Bildausschnittes und/oder die Position des Bildausschnittes innerhalb des wenigstens einen Bildes, wobei Einstellparameter 110 der Kamera vom dritten Funktionsmodul 74 an die Kamera 10 übertragen werden. Im bevorzugten Ausführungsbeispiel werden in Abhängigkeit der Einstellparameter 110 aus der CMOS-Kamera 10 der entsprechende Bildausschnitt in Form von Bilddaten 112 ausgelesen und an das vierte Funktionsmodul 76 übertragen. Im vierten Funktionsmodul 76 wird der Bildausschnitt auf Zielbildgröße der Anzeigeeinheit 14 und/oder der benötigten Größe für die nachfolgenden Systeme 18 abgebildet. Hierbei wird berücksichtigt, dass die Zielbildgröße konstant sein soll, da die Auflösung der Anzeigeeinheit 14 unveränderlich ist. Dies leistet das vierte Funktionsmodul 76, das die Bildgröße durch variable Unterabtastung und/oder durch Zoomen auf eine einheitliche Größe bringt. In diesem Modul wird alternativ oder zusätzlich die Verzeichnung durch das Objektiv kompensiert. Dies erfolgt beispielsweise über bilineare Interpolation mittels Look-up-Tabellen. Verzeichnung ist insbesondere auf nicht optimale Platzierung, beispielsweise aus konstruktiven Gründen, der Aperturblende im Objektiv zurückzuführen. Die angepassten Bilddaten 114 werden vom vierten Funktionsmodul 76 an das fünfte Funktionsmodul 78 übertragen. Aufgrund der geometrischen Verhältnisse in der Kamera 10 nimmt die Intensität ab, je weiter man sich von der optischen Achse entfernt. Dies wird als natürliche Vignettierung (Randabschattung) bezeichnet. Diese Abnahme ist nicht bildszenenabhängig und kann daher rechnerisch kompensiert werden. Vorteilhafterweise erfolgt dies durch look-up-Tabellen und/oder Kennfelder. Diese Funktionalität wird durch das fünfte Funktionsmodul 78 geleistet, das die Kompensation dieses Intensitätsabfalls durchführt. Die homogenen Bilddaten 116 werden schließlich an die Anzeigeeinheit 14 und/oder nachfolgende Systeme 18 zur Bereitstellung von Kamerafunktionen, wie Spurverlassenswarnung, übertragen.

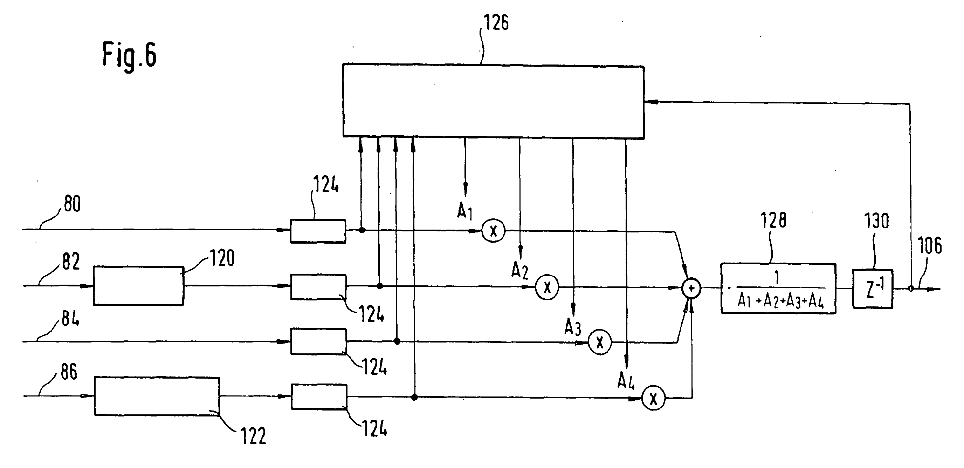

Figur 6 zeigt ein Blockdiagramm des Signalflusses zur Berechnung des Nickwinkels 106 der Kamera im Funktionsmodul 70 nach Figur 5 des bevorzugten Ausführungsbeispiels, bestehend aus Funktionsmodulen 120, 122, 124, 126, 128, 130. Aus den Bilddaten 80 der Frontkamera 10 und den Bilddaten 86 der Innenraumkamera werden in dem Funktionsmodul 120 zur Nickwinkelberechnung und im Funktionsmodul 122 zur Fahrer-Blickwinkel-Berechnung zunächst Schätzwerte für den Nickwinkel bzw. die Blickrichtung des Fahrers in Nickwinkelrichtung ermittelt. Dann werden alle vier Eingangswerte für den Nickwinkel, basierend auf den Daten 80 des Fahrwerk, den Bilddaten 82 der Kamera, den Daten 84 der dynamischen Lichtweitenkorrektur und den Bilddaten 86 der Innenraumkamera, in den Funktionsmodulen 124 zeitlich gefiltert und über Gewichtungsfaktoren A1, A2, A3, A4 gewichtet summiert. Die Gewichtungsfaktoren A1, A2, A3, A4 werden dabei von einem Klassifikator für die Fahrsituation als Funktionsmodul 126 verändert, der neben der letzten Schätzung für den Nickwinkel, durch das Funktionsmodul 130 zur Verzögerung durch z hoch minus 1-Glied, die aktuellen Eingangswerte berücksicht. Neben linearen und/oder nichtlinearen Klassifikatoren werden Fuzzy-Klassifikatoren oder neuronale Netzwerke verwendet. Nach dem Funktionsmodul 128 zur Normierung und dem Funktionsmodul 130 zur Verzögerung wird der erforderliche Nickwinkel 106 der Kamera berechnet. In einer Variante wird wenigstens ein Gewichtungsfaktor A1, A2, A3, A4 zu 0 gesetzt. In einer bevorzugten Variante wird der Nickwinkel 106 lediglich aus den Daten 80 der Fahrwerksensoren berechnet und/oder der Nickwinkel 106 wird aus den Daten 84 der dynamischen Lichtweitenkorrektur übernommen.

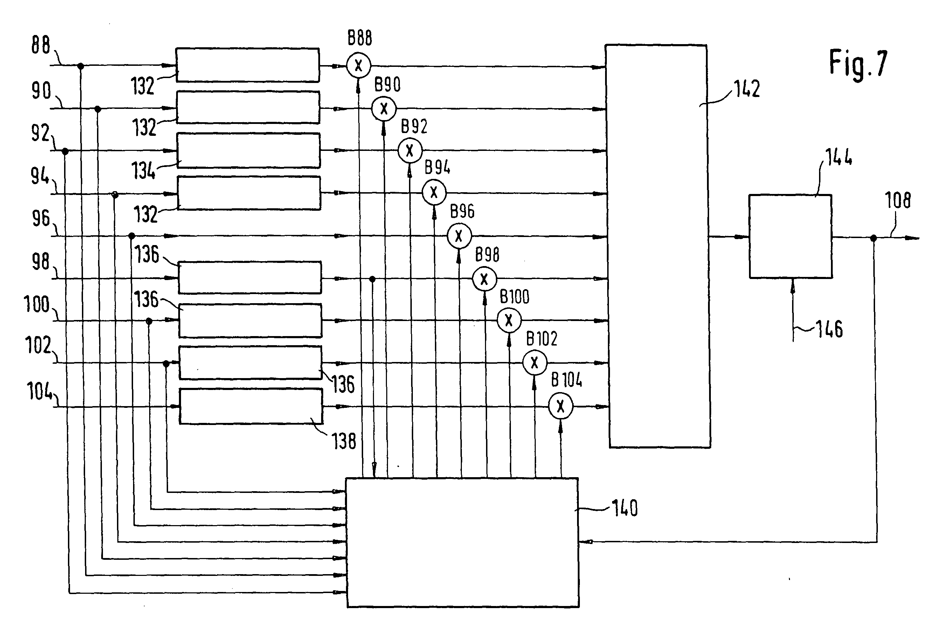

Figur 7 zeigt ein Blockdiagramm des Signalflusses zur Berechnung des Gierwinkels 108 der Kamera im Funktionsmodul 72 nach Figur 5 des bevorzugten Ausführungsbeispiels, bestehend aus Funktionsmodulen 132, 134, 136, 138, 140, 142, 144. Zunächst werden aus reinen Winkelinformationen der Daten 88 des Lenkradsensors und/ oder der Daten 90 des Lenkwinkelsensors und/ oder der Daten 94 der Vorrichtung der Fahrdynamikregelung (ESP) durch Extrapolation die relevanten Punkte (Points of interest) des durch die Funktionsmodule 132 zur Spurextraktion ermittelten Fahrschlauches bestimmt. Die Information der anderen Sensoren werden in den weiteren Funktionsmodulen 134, 136, 138 aufbereitet, also der Winkel 92 der Frontscheinwerfer im Funktionsmodul 134 zur Leuchtspurextrapolation und/ oder die Daten 96 des Navigationssystems und/ oder die Bilddaten 98 der Kamera im Funktionsmodul 136 zur Spurberechnung und/ oder die Daten 100 von weiteren Fahrzeugsensoren im Funktionsmodul 136 zur Spurberechnung und/ oder die Daten 102 einer Einrichtung zur Kraftfahrzeug- Umfeld- Kommunikation im Funktionsmodul 136 zur Spurberechnung und/ oder die Bilddaten 104 einer Innenraumkamera im Funktionsmodul 138 zur Blickfeldberechnung, so dass die relevanten Punkte (Points of interest) in Abhängigkeit dieser Datenquellen ebenfalls vorliegen. Gleichzeitig werden die Daten 88, 90, 92, 94, 96, 98, 100, 102, 104 dieser Sensoren dem Funktionsmodul 140, einem Klassifikator für Fahrsituationen, zugeführt, der eine Fahrsituation berechnet und hieraus Gewichtungsfaktoren B88, B90, B92, B94, B96, B98, B100, B102, B104 für die relevanten Punkte (Points of interest) berechnet. Die so gewichteten Points of interest werden dann im Funktionsmodul 142 zweidimensional überlagert, d.h. es wird eine 2- D- Überlagerung der relevanten Punkte vorgenommen (2D- Overlay der Points- of- interest). Dies erfolgt durch Eintragen und Aufsummieren der gewichteten Points of interest in einer gerasterten zweidimensionalen Karte (2D- Karte). Im anschließenden Funktionsmodul 144, einem Gierwinkelfitter, wird dann durch ein Anpassverfahren (Fitting- Verfahren), beispielsweise einem Least- Squares- Verfahren, durch Vergleich (Matching) mit abgelegten Verläufen der relevanten Punkte 146 (Pointof-interest- Verläufen) der gesuchte Gierwinkel 108 der Kamera ermittelt. Der berechnete Gierwinkel 108 wird vorzugsweise ebenfalls für die Berechnung der nächsten Fahrsituation im Funktionsmodul 140, dem Klassifikator für Fahrsituationen, verwendet. In einer Variante wird wenigstens ein Gewichtungsfaktor B88, B90, B92, B94, B96, B98, B 100, B 102, B 104 zu 0 gesetzt, bzw. wenigstens eine Eingangsgröße 88, 90, 92, 94, 96, 98, 100, 102, 104 geht nicht in das Verfahren ein, weil diese zeitweise oder fahrzeugbedingt nicht vorliegt. In einer bevorzugten Variante wird der Gierwinkel 108 lediglich aus den Daten 88 des Lenkwinkelsensors berechnet und/ oder der Gierwinkel 108 wird aus dem Winkel 92 der Frontscheinwerfer ermittelt.

Alternativ oder zusätzlich wird das Verfahren, die Vorrichtung und die Verarbeitungseinheit bei zwei Kameras, insbesondere einer Stereokamera, eingesetzt. Ferner sind weitere Einbauorte der wenigstens einen Kamera im Kraftfahrzeug denkbar. Insbesondere ist das Verfahren, die Vorrichtung und die Verarbeitungseinheit bei einer Rückfahrkamera einsetzbar, wobei die Rückfahrkamera bevorzugt an der Heckscheibe des Kraftfahrzeuges angebracht ist.

In einer weiteren Variante des bevorzugten Ausführungsbeispiels wird auf die Anpassung der Größe des Bildausschnittes verzichtet. Obgleich sich der Öffnungswinkel des Bildausschnittes bei Änderung der Position des Bildausschnittes ändert, ist kein Rechenaufwand zur Steuerung der Größe des Bildausschnittes erforderlich. Ferner entfällt die Abbildung des Bildausschnittes auf die Zielbildfeldgröße, da der Bildausschnitt eine konstante Größe aufweist.

In einer weiteren Variante des bevorzugten Ausführungsbeispiels wird die elektronische Nachführung der Kamera in Gierwinkel- und/oder Nickwinkel- und/oder Wankwinkelrichtung durch eine mechanische Nachführung der optische Achse der Kamera ergänzt. Die mechanische Nachführung der optischen Achse der Kamera erfolgt beispielsweise durch elektromechanische, pneumatische, hydraulische, piezomechanische und/oder formgedächtnisbasierten Stellantriebe. Hierbei wird die komplette Kamera in Gierwinkel- und/oder Nickwinkel- und/oder Wankwinkelrichtung nachgeführt. Ferner wird in einer weiteren Variante eine direkte mechanische Kopplung der Kamera an die Lenkung vorgenommen. In einer alternativen Ausführungsform werden Stellantriebe verwendet, die einen Spiegel und/oder andere optische Einheiten nachführen, die sich im Strahlengang der Kamera befinden. Dies hat den Vorteil, dass geringe Massen zur Nachführung zu bewegen sind. In einer weiteren Variante sind Stellantriebe zur Nachführung des Objektivs vorhanden, wobei die Kamera starr am Kraftfahrzeug angebracht ist. Alternativ oder zusätzlich ist in einer weiteren Variante die Kamera im nachgeführten Scheinwerfer untergebracht. In besonders vorteilhafter Weise wird die elektronische und die mechanische Nachführung der Kamera derart kombiniert, dass in Nickwinkel- und/oder Gierwinkel- und/oder Wankwinkelrichtung jeweils die elektronische und/oder die mechanische Nachführung eingesetzt wird.

Der Einsatz des beschriebenen Verfahrens, der Vorrichtung und der Verarbeitungseinheit tritt bei CMOS-Kameras zu Tage, indem durch Beobachten (Monitoren) der Register- Einstellungen des CMOS- Bildsensors das Nachführen des Bildausschnittes (area of interest bzw. window- of- interest ) festgestellt wird. Die Nutzung der Spurinformation der Kamera kann daran erkannt werden, wenn der Erfassungsbereich vor Einfahren in der Kurve richtig nachgeführt wird, insbesondere auch dann, wenn Navigationsinformationen falsch und/ oder nicht vorhanden sind.

## Patentansprüche

1. Verfahren zur Verbesserung der Sicht in einem Kraftfahrzeug, wobei wenigstens eine einen CMOS-Bildsensor aufweisende Kamera (10) des Kraftfahrzeuges wenigstens ein Bild der Umgebung des Kraftfahrzeugs aufnimmt, wobei wenigstens ein Bildausschnitt (48) des wenigstens einen Bildes bereitgestellt wird, wobei die Größe des Bildausschnittes und/oder die Position des Bildausschnittes innerhalb des wenigstens einen Bildes beispielsweise zumindest in Abhängigkeit des Straßenverlaufs und/oder der aktuellen und/oder vom Fahrer gewünschten Fahrtrichtung des Kraftfahrzeuges eingestellt wird, wobei der Bildausschnitt an eine Anzeigeeinheit (14) zur Anzeige und/ oder an nachfolgende Systeme (18) übertragen wird,
**dadurch gekennzeichnet, dass**
die Kamera derart angesteuert wird, dass die Kamera den Bildausschnitt des wenigstens einen Bildes unmittelbar bereitstellt, und
dass der Bildausschnitt durch Auslesen von Pixelbereichen des CMOS-Bildsensors der Kamera bereitgestellt wird, indem Konfigurationsregister im CMOS Bildsensor beschrieben werden.

2. Verfahren nach Anspruch 1, **dadurch gekennzeichnet, dass** als Größe des Bildausschnittes die Breite (58) des Bildausschnittes und/oder die Höhe (56) des Bildausschnittes eingestellt wird.

3. Verfahren nach einem der vorhergehenden Ansprüche, **dadurch gekennzeichnet, dass** der Straßenverlauf in Abhängigkeit von Daten (96) wenigstens eines Navigationssystems und/oder von Bilddaten wenigstens einer Kamera (10) und/oder von Bilddaten der wenigstens einen Kamera und/oder von Daten (102) wenigstens einer Einrichtung zur Kraftfahrzeug-Kraftfahrzeug-Kommunikation und/oder von Daten wenigstens einer Einrichtung zur Kraftfahrzeug-Umfeld-Kommunikation und/oder von Daten wenigstens eines weiteren Kraftfahrzeugsensors (88, 90, 92, 94, 96, 98, 100, 102, 104) ermittelt wird.

4. Verfahren nach einem der vorhergehenden Ansprüche, **dadurch gekennzeichnet, dass** die Größe des Bildausschnittes und/oder die Position des Bildausschnittes innerhalb des wenigstens einen Bildes zumindest in Abhängigkeit der Daten wenigstens eines weiteren Kraftfahrzeugsensors (88, 90, 92, 94, 96, 98, 100, 102, 104) eingestellt wird.

5. Verfahren nach einem der vorhergehenden Ansprüche, **dadurch gekennzeichnet, dass** die Größe des Bildausschnittes und/oder die Position des Bildausschnittes innerhalb des wenigstens einen Bildes zumindest in Abhängigkeit der Einstellung der Scheinwerfer des Kraftfahrzeuges eingestellt wird.

6. Verfahren nach einem der vorhergehenden Ansprüche, **dadurch gekennzeichnet, dass** die Größe des Bildausschnittes in Abhängigkeit der Position des Bildausschnittes innerhalb des wenigstens einen Bildes eingestellt wird.

7. Verfahren nach einem der vorhergehenden Ansprüche, **dadurch gekennzeichnet, dass** die Richtung der optischen Achse der Kamera in Bezug zum Kraftfahrzeug durch einen mechanischen Antrieb einstellbar ist.

8. Verfahren nach einem der vorhergehenden Ansprüche, **dadurch gekennzeichnet, dass** der wenigstens eine Bildausschnitt an die Auflösung der Anzeigeeinheit (14) angepasst wird.

9. Vorrichtung zur Verbesserung der Sicht in einem Kraftfahrzeug, insbesondere zur Durchführung des Verfahrens nach wenigstens einem der Ansprüche 1 bis 8, mit wenigstens einer einen CMOS-Bildsensor aufweisenden Kamera (10) des Kraftfahrzeuges, die wenigstens ein Bild der Umgebung des Kraftfahrzeuges aufnimmt, und wenigstens einer Verarbeitungseinheit (12), wobei die wenigstens eine Verarbeitungseinheit wenigstens einen Bildausschnitt (48) des wenigstens einen Bildes bereitstellt, wobei die wenigstens eine Verarbeitungseinheit die Größe des Bildausschnittes und/oder die Position des Bildausschnittes innerhalb des wenigstens einen Bildes beispielsweise zumindest in Abhängigkeit des Straßenverlaufes und/oder der aktuellen und/oder der vom Fahrer gewünschten

**EP 1 504 960 B1**

Fahrtrichtung des Kraftfahrzeuges einstellt, wobei die Verarbeitungseinheit den Bildausschnitt an eine Anzeigeeinheit (14) zur Anzeige und/oder an nachfolgende Systeme (18) überträgt,
**dadurch gekennzeichnet, dass**
die Verarbeitungseinheit die Kamera derart ansteuert, dass die Kamera den Bildausschnitt des wenigstens einen Bildes unmittelbar bereitstellt, und
wobei im CMOS Bildsensor Konfigurationsregister vorgesehen sind, die derart eingerichtet sind, dass der Bildausschnitt durch Auslesen von Pixelbereichen des CMOS-Bildsensors der Kamera bereitgestellt werden kann, indem die Konfigurationsregister beschrieben werden.

**Claims**

1. Method for improving visibility in a motor vehicle, wherein at least one camera (10), having a CMOS image sensor, of the motor vehicle captures at least one image of the surroundings of the motor vehicle, wherein at least one image excerpt (48) of the at least one image is prepared, wherein the size of the image excerpt and/or the position of the image excerpt within the at least one image is set, for example, at least as a function of the road profile and/or of the current direction of travel of the motor vehicle and/or that desired by the driver, wherein the image excerpt is transmitted to a display unit (14) for display and/or to subsequent systems (18),
**characterized in that**
the camera is actuated in such a way that the camera prepares the image excerpt of the at least one image directly, and **in that** the image excerpt is prepared by reading out pixel areas of the CMOS image sensor of the camera by writing into configuration registers in the CMOS image sensor.

2. Method according to Claim 1, **characterized in that** the width (58) of the image excerpt and/or the height (56) of the image excerpt are/is set as the size of the image excerpt.

3. Method according to one of the preceding claims, **characterized in that** the road profile is determined as a function of data (96) of at least one navigation system and/or of image data of at least one camera (10) and/or of image data of the at least one camera and/or of data (102) of at least one device for motor vehicle-to-motor vehicle communication and/or of data of at least one device for motor vehicle-surroundings communication and/or of data of at least one further motor vehicle sensor (88, 90, 92, 94, 96, 98, 100, 102, 104).

4. Method according to one of the preceding claims, **characterized in that** the size of the image excerpt and/or the position of the image excerpt within the at least one image is set at least as a function of the data of at least one further motor vehicle sensor (88, 90, 92, 94, 96, 98, 100, 102, 104).

5. Method according to one of the preceding claims, **characterized in that** the size of the image excerpt and/or the position of the image excerpt within the at least one image are/is set at least as a function of the setting of the headlights of the motor vehicle.

6. Method according to one of the preceding claims, **characterized in that** the size of the image excerpt is set as a function of the position of the image excerpt within the at least one image.

7. Method according to one of the preceding claims, **characterized in that** the direction of the optical axis of the camera with respect to the motor vehicle can be set by means of a mechanical drive.

8. Method according to one of the preceding claims, **characterized in that** the at least one image excerpt is adapted to the resolution of the display unit (14).

9. Device for improving visibility in a motor vehicle, in particular for carrying out the method according to at least one of Claims 1 to 8, having at least one camera (10), having a CMOS image sensor, of the motor vehicle, which camera captures at least one image of the surroundings of the motor vehicle, and at least one processing unit (12), wherein the at least one processing unit prepares at least one image excerpt (48) of the at least one image, wherein the at least one processing unit sets the size of the image excerpt and/or the position of the image excerpt within the at least one image, for example, at least as a function of the road profile and/or of the current direction of travel of the motor vehicle and/or that desired by the driver, wherein the processing unit transmits the image excerpt to a display unit (14) for display and/or to subsequent systems (18),
**characterized in that**

the processing unit actuates the camera in such a way that the camera prepares the image excerpt of the at least one image directly, and
wherein in the CMOS image sensor configuration registers are provided which are configured in such a way that the image excerpt can be prepared by reading out pixel areas of the CMOS image sensor of the camera by writing into the configuration registers.

## Revendications

1. Procédé d'amélioration de la vision dans un véhicule automobile, dans lequel
une caméra (10) du véhicule automobile, qui présente un capteur d'image CMOS, enregistre au moins une image de l'environnement du véhicule automobile,
au moins une partie (48) de la ou des images est délivrée,
la grandeur de la partie de l'image et/ou la position de la partie de l'image à l'intérieur de la ou des images sont ajustées par exemple au moins en fonction de l'évolution de la chaussée et/ou de la direction de déplacement du véhicule automobile en cours et/ou souhaitée par le conducteur et
la partie de l'image est transférée à une unité d'affichage (14) pour être affichée et/ou à des systèmes (48) situés en aval,
**caractérisé en ce que**
la caméra est commandée de telle sorte que la caméra délivre directement la partie de la ou des images et
**en ce que** la partie d'image est délivrée par lecture de zones de pixels du capteur d'image CMOS de la caméra en décrivant des registres de configuration du capteur d'image CMOS.

2. Procédé selon la revendication 1, **caractérisé en ce que** la largeur (58) de la partie d'image et/ou la hauteur (56) de la partie d'image sont ajustées en tant que taille de la partie d'image.

3. Procédé selon l'une des revendications précédentes, **caractérisé en ce que** l'évolution de la chaussée est déterminée en fonction de données (96) d'au moins un système de navigation, de données d'image d'au moins une caméra (10), de données d'image de la ou des caméras, de données (102) d'au moins un dispositif de communication entre véhicules automobiles, de données d'au moins un dispositif de communication du véhicule automobile avec son environnement et/ou de données d'au moins un autre capteur (88, 90, 92, 94, 96, 98, 100, 102, 104) du véhicule automobile.

4. Procédé selon l'une des revendications précédentes, **caractérisé en ce que** la taille de la partie d'image et/ou la position de la partie d'image dans la ou les images sont ajustées au moins en fonction des données d'au moins un autre capteur (88, 90, 92, 94, 96, 98, 100, 102, 104) du véhicule automobile.

5. Procédé selon l'une des revendications précédentes, **caractérisé en ce que** la taille de la partie d'image et/ou la position de la partie d'image dans la ou les images sont ajustées au moins en fonction du réglage des phares du véhicule automobile.

6. Procédé selon l'une des revendications précédentes, **caractérisé en ce que** la taille de la partie d'image est ajustée en fonction de la position de la partie d'image à l'intérieur de la ou des images.

7. Procédé selon l'une des revendications précédentes, **caractérisé en ce que** la direction des l'axe optique de la caméra par rapport au véhicule automobile peut être ajustée par un entraînement mécanique.

8. Procédé selon l'une des revendications précédentes, **caractérisé en ce que** la ou les parties d'image sont adaptées à la résolution de l'unité d'affichage (14).

9. Dispositif d'amélioration de la vision dans un véhicule automobile, en particulier en vue de la mise en oeuvre du procédé selon au moins l'une des revendications 1 à 8, et présentant
au moins une caméra (10) du véhicule automobile dotée d'un capteur d'image CMOS et qui enregistre au moins une image de l'environnement du véhicule automobile et
au moins une unité de traitement (12),
la ou les unités de traitement délivrant au moins une partie (48) de la ou des images,
la ou les unités de traitement ajustant la taille de la partie d'image et/ou la position de la partie d'image à l'intérieur de la ou des images par exemple au moins en fonction de l'évolution de la chaussée et/ou de la direction de déplacement du véhicule automobile en cours et/ou souhaitée par le conducteur,

l'unité de traitement transférant la partie d'image à une unité d'affichage (14) pour l'afficher et/ou à des systèmes (18) situés en aval,

**caractérisé en ce que**

l'unité de traitement commande la caméra de telle sorte que la caméra délivre directement la partie de la ou des images et

**en ce que** des registres de configuration qui sont conçus de telle sorte que la partie d'image puisse être délivrée par lecture de zones de pixels du capteur d'image CMOS de la caméra en décrivant des registres de configuration sont prévus dans le capteur d'image CMOS.

Fig.1

Fig.2

50    52    54

44    44    44

36    36    36

**Fig.3**

48  46    48  46    48  46

30    32    34

56    58    58    58

56    56

X + Δ X    X    X + Δ X

y    y    y

48  46    48  46    48  46

**Fig.4**

Fig.5

# Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4032927 A1
- EP 0869031 A2
- DE 19950033 A1
- WO 0236389 A1